# EUROPÄISCHE PATENTSCHRIFT

(11) **EP 4 196 345 B1**
(45) Veröffentlichungstag und Bekanntmachung des Hinweises auf die Patenterteilung: **17.09.2025**
(21) Anmeldenummer: 21763059.9
(22) Anmeldetag: 16.08.2021
(51) Int. Cl.: B32B 5/02, B32B 5/26, B32B 5/06

(54) **VERFAHREN ZUR HERSTELLUNG EINES BLATTFÖRMIGEN WIRKSTOFFTRÄGERS SOWIE WIRKSTOFFTRÄGER**
METHOD FOR PRODUCING A SHEET-FORM ACTIVE INGREDIENT CARRIER, AND ACTIVE INGREDIENT CARRIER
PROCÉDÉ DE FABRICATION D'UN SUPPORT DE PRINCIPE ACTIF SOUS FORME DE FEUILLET ET SUPPORT DE PRINCIPE ACTIF

(30) Priorität: 17.08.2020 DE 102020121537; 27.04.2021 DE 102021110796
(43) Veröffentlichungstag der Anmeldung: 21.06.2023
(73) Patentinhaber: Avet AG, 6330 Cham (CH)
(72) Erfinder: SACKS, Roland, 6330 Cham (CH)
(74) Vertreter: Mertzlufft-Paufler, Cornelius
(86) Internationale Anmeldenummer: PCT/EP2021/072687
(87) Internationale Veröffentlichungsnummer: WO 2022/038077

(56) Entgegenhaltungen:
- EP-A1- 1 978 139
- WO-A1-01/45613
- DE-A1- 102015 001 510
- JP-B2- 6 516 001

## Beschreibung

Die Erfindung betrifft ein Verfahren zur Herstellung eines blattförmigen Wirkstoffträgers, der zumindest einen wasserlöslichen Wirkstoff beinhaltet, welcher in herstellerseitig getrocknetem Zustand gespeichert und durch Wasserzugabe lösbar und aktivierbar ist.

Die Erfindung befasst sich auch mit einem solchen blattförmigen Wirkstoffträger, der zumindest einen wasserlöslichen Wirkstoff beinhaltet, welcher in herstellerseitig getrocknetem Zustand gespeichert und durch Wasserzugabe aktivierbar ist.

Aus der DE 10 2015 001 462 B3 der Anmelderin ist bereits ein Wischtuch vorbekannt, das als mehrlagiger Reinigungsmittelträger ausgebildet ist und zumindest zwei unmittelbar übereinanderliegende Materiallagen aufweist, von denen eine erste äußere Materiallage eine außenliegende Wisch- und Reinigungslage bildet und von denen die zweite Materiallage als Speicherlage ausgebildet ist. Um mit Hilfe dieses vorbekannten Wischtuches über eine festgelegte Fläche einen gleichbleibenden Auftrag von Reinigungsflüssigkeit zu erreichen, sind die zumindest zwei übereinanderliegenden Materiallagen des vorbekannten Wischtuches aus textilem Material vorzugsweise wenigstens annähernd gleicher Saug- oder Wasserabgabefähigkeit hergestellt, wobei die Wisch- und Reinigungslage einerseits und die Speicherlage andererseits mechanisch flächig miteinander verbunden sind. In zumindest einer der übereinanderliegenden Materiallagen ist ein durch Wasserzugabe reaktivierbares Reinigungsmittel vorgesehen.

Aus der EP 0 161 911 A2 kennt man bereits ein Wischtuch, das in einer inneren Speicherlage mit einem durch Wasserzugabe reaktivierbaren Reinigungsmittel getränkt ist, welche Speicherlage beidseits zwischen zwei Trennlagen angeordnet ist. Dabei ist die innere Speicherlage mit einem Reinigungssubstrat imprägniert und zwischen den beiden Trennlagen angeordnet, die zur kontrollierten Abgabe des Reinigungssubstrats bei Wasserzugabe dienen.

Aus der JP 6 516001 B2 ist eine Cyclodextrin-enthaltende Lage, die eine funktionelle Komponente enthält, bekannt, wobei die Cyclodextrin-enthaltende Lage durch ein Trockenverfahren bereitgestellt wird, die Cyclodextrin-enthaltende Lage Fasern enthält und die durch die Fasern gebildeten Hohlräume das Cyclodextrin enthalten.

Ähnliche Lagen und Flächengebilde sind aus den EP 1 978 139 A1, WO 01/45613 A1 und DE 10 2015 001510 A1 bekannt.

Waschmittel für Waschmaschinen und Spülmittel für Geschirrspülmaschinen wurden bislang regelmäßig in Pulverform angeboten. Da das Abwiegen eines pulvrigen Wasch- oder Spülmittels für den Endverbraucher unüblich ist, und da dem Endverbraucher das Abmessen einer geeigneten Teilmenge des pulvrigen Wasch- oder Spülmittels entsprechend dem jeweils gegebenen Verschmutzungsgrad der zu reinigenden Waschstücke und/oder an die am Einsatzort vorgefundenen Wassereigenschaften nur schwer möglich ist, hat man auch bereits flüssige Wasch- oder dergleichen Reinigungsmittel geschaffen. Diese flüssigen Wasch- oder dergleichen Reinigungsmittel weisen häufig im Vergleich zu solchen Wasch- oder Reinigungsmitteln in Pulverform nicht eine vergleichbare Reinigungskraft auf, was meist durch eine großzügig bemessene übermäßige Menge des flüssigen Wasch-, Spül- oder dergleichen Reinigungsmittels ausgeglichen wird.

Man hat auch bereits sogenannte Reinigungstabs geschaffen, in denen ein Wasch- oder Spülmittel mit Hilfe von Mikroplastik in Tablettenform gebunden ist. Zwar erleichtern solche Reinigungstabs die Handhabung wesentlich, - nachteilig ist jedoch, dass eine Dosierung des im Wasch- oder Reinigungsvorgang verwendeten Reinigungsmittels allenfalls durch mittiges Durchbrechen eines solchen Reinigungstabs möglich ist. Demgegenüber ist eine genauere Dosierung und Anpassung der verwendeten Teilmenge des Reinigungsmittels entsprechend dem Verschmutzungsgrad oder den jeweiligen Wassereigenschaften des zu Reinigungszwecken verwendeten Wassers nicht ohne weiteres möglich.

Es besteht daher die Aufgabe, ein Verfahren zur Herstellung eines Wirkstoffträgers der eingangs erwähnten Art zu schaffen, welcher Wirkstoffträger sich durch eine wesentlich vereinfachte Handhabung auszeichnet. Es besteht auch die Aufgabe, einen Wirkstoffträger der eingangs erwähnten Art zu schaffen, der auf möglichst einfache Weise handhabbar ist.

Die erfindungsgemäße Lösung dieser Aufgabe besteht bei dem Verfahren der eingangs erwähnten Art insbesondere darin, dass der zumindest eine Wirkstoff als streu- oder rieselfähiges Pulver auf ein Innenvlies aus wasserlöslichem Material aufgestreut und daraus anschließend durch Schmelzen ein fester Verbund hergestellt wird und dass der aus dem Innenvlies und dem zumindest einen, als Streupulver aufgetragenen Wirkstoff hergestellte Verbund als Kernlage zwischen beidseits aufgebrachte Außenvliese wasserlöslichem Material positioniert wird.

Bei dem erfindungsgemäßen Verfahren wird zumindest ein vorzugsweise wasserlöslicher Wirkstoff als streu- oder rieselfähiges Pulver auf ein Innenvlies aufgestreut, welches Innenvlies aus wasserlöslichem Material hergestellt ist. Aus dem Innenvlies und dem darauf als Streupulver aufgetragenen Wirkstoff wird anschließend durch Schmelzen ein fester Verbund hergestellt. Dieser Schmelzprozess ist umweltfreundlich, da kein Entzug von Wasser notwendig ist und auch keine Abwässer anfallen. Ebenso werden Emissionen der Luft weitestgehend reduziert. Auch zeichnet sich das erfindungsgemäße Verfahren durch seine Wirtschaftlichkeit aus. Der aus dem Innenvlies und dem zumindest einen, als Streupulver aufgetragenen Wirkstoff hergestellte Verbund wird in einem nachfolgenden Verfahrensschritt als Kernlage zwischen beidseits aufgebrachte Außenvliese positioniert, die ebenfalls aus einem wasserlöslichen Material hergestellt sind. Durch die die Außenseite des Wirkstoffträgers bildenden Außenvliese ist der Wirkstoff im Inneren des Wirkstoffträgers geschützt untergebracht, so dass beispielsweise ein unnötiger Kontakt des Anwenders mit dem Wirkstoff bei der Handhabung oder der Portionierung des Wirkstoffträgers vermieden werden kann. Der im erfindungsgemäßen Verfahren hergestellte Wirkstoffträger zeichnet sich daher durch seine einfache Handhabung aus.

Um den zumindest einen Wirkstoff in der angestrebten Wirkstoffmenge gleichmäßig über das Innenvlies verteilen zu können, ist es vorteilhaft, wenn der zumindest eine Wirkstoff vor dem Aufstreuen auf das Innenvlies durch einen Mahl- und Homogenisierprozess zu dem streu- und rieselfähigen Pulver aufbereitet wird.

Die Wirtschaftlichkeit des erfindungsgemäßen Verfahrens wird noch zusätzlich begünstigt, wenn das Innenvlies und der zumindest eine, als Pulver aufgestreute Wirkstoff bei einer Temperatur im Bereich zwischen 140° bis 220° zu einem festen Verbund geschmolzen werden.

Die Konsistenz und die Praktikabilität des im erfindungsgemäßen Verfahren hergestellten Wirkstoffträgers werden noch verbessert, wenn das Innenvlies und der zumindest eine, als Pulver aufgestreute Wirkstoff geschmolzen und durch einen Kalander-Prozess zu einem festen Verbund verpresst werden.

Bei dem Wirkstoffträger der eingangs erwähnten Art besteht die erfindungsgemäße Lösung der oben gestellten Aufgabe insbesondere darin, dass der plattenförmige Wirkstoffträger eine, den zumindest einen Wirkstoff tragende Innenschicht aufweist, die beidseits durch textile Schichten aus wasserlöslichen Außenvliesen abgedeckt ist.

Da die den zumindest einen Wirkstoff tragende Innenschicht beidseits durch textile Schichten aus wasserlöslichen Außenvliese abgedeckt ist, ist der Wirkstoff im Inneren des blatt- oder tafelförmigen Wirkstoffträgers geschützt untergebracht. Da somit ein direkter Hautkontakt des Anwenders mit dem in der Innenschicht befindlichen, zumindest einen Wirkstoff ausgeschlossen wird, lassen sich im erfindungsgemäßen Wirkstoffträger auch beispielsweise hautreizende oder im Umgang als gefährlich eingestufte Wirkstoffe derart einsetzen, dass deren Anwendung wesentlich vereinfacht ist.

Eine bevorzugte Weiterbildung gemäß der Erfindung sieht bei dem blattförmigen Wirkstoffträger vor, dass die den zumindest einen Wirkstoff tragende Innenschicht ein Innenvlies aus wasserlöslichem Material aufweist, welches Innenvlies mit dem zumindest einen, als streu- und rieselfähiges Pulver aufgestreuten Wirkstoff durch Schmelzen verbunden und/oder durch einen Kalander-Prozess verpresst ist. Der erfindungsgemäße Wirkstoffträger wird somit in einem eingebetteten Schmelzprozess hergestellt, wobei ein den zumindest einen Wirkstoff tragendes Innenvlies beidseits durch textile Außenvliese abgedeckt ist.

Vorteilhaft kann es sein, wenn der zumindest eine Wirkstoff ein Wasch-, Spül-, Reinigungs- oder Lebensmittel ist. Enthält der erfindungsgemäße Wirkstoffträger ein Waschmittel, kann dieser blattförmige Waschmittelträger beispielsweise in einer Waschmaschine als Waschmittel auf einfache Weise eingesetzt und je nach Bedarf portioniert werden. Ist der Wirkstoff demgegenüber als Spülmittel ausgebildet, lässt sich der erfindungsgemäße Wirkstoffträger als Alternative zu flüssigen oder körnigen Geschirrspülmitteln in einer Geschirrspülmaschine verwenden.

Erfindungsgemäß kann das Reinigungsmittel ein reinigendes Körperpflegemittel sein.

Möglich ist aber auch, dass das im erfindungsgemäßen Wirkstoffträger als Wirkstoff enthaltene Lebensmittel ein den Anwender stimulierendes Lebensmittel, beispielsweise Tee, ist. Eine einfach herstellbare Ausführungsform gemäß der Erfindung sieht vor, dass das Innenvlies aus einem Polyvinylalkohol hergestellt ist.

Vorteilhaft kann es sein, wenn der als Reinigungsmittel ausgebildete Wirkstoff wenigstens ein schmelzendes Tensid und mindestens ein schmelzendes Polymer enthält.

Dabei sieht eine bevorzugte Ausführungsform gemäß der Erfindung vor, dass dem, wenigstens ein schmelzendes Tensid und mindestens ein schmelzendes Polymer enthaltenden Wirkstoff zumindest ein temperaturstabiles, nicht-schmelzendes Bleichmittel und/oder Komplexbildner und/oder Enzym als Additiv beigemischt ist.

Vorteilhaft ist es, wenn in dem zumindest einen Wirkstoff das mindestens eine Tensid einen Anteil von 10 bis 60 Gewichtsprozent (trocken) hat und wenn das schmelzende Polymer einen Anteil von 20 bis 40 Gewichtsprozent (trocken) aufweist.

Um den erfindungsgemäßen Waschmittelträger als wirkungsvolles Reinigungsmittel einzusetzen, kann es vorteilhaft sein, wenn der Wirkstoff Natriumlaurylsulfat als schmelzendes Tensid enthält. Dabei kann das als Natriumlaurylsulfat ausgebildete Tensid einen Schmelzpunkt von etwa 206° C haben.

Zweckmäßig ist es, wenn als schmelzendes Polymer beispielsweise ein Polyvinylalkohol, insbesondere mit einem Schmelzpunkt von ca. 200°, verwendet ist.

Zusätzlich oder statt der oben beschriebenen Ausführungsbeispiele kann bei dem erfindungsgemäßen blattförmigen Wirkstoffträger zur Lösung der oben beschriebenen Aufgabe auch vorgesehen sein, dass der Wirkstoffträger durch Abbrechen und/oder Trennen einzelner Teilbereiche des Wirkstoffträgers portionierbar ist. In diesem blattförmigen Wirkstoffträger ist beispielsweise zumindest ein Wasch-, Spül-, Reinigungs- oder Lebensmittel in herstellerseitig getrocknetem Zustand flächig verteilt gespeichert. Durch Wasserzugabe kann der im Wirkstoffträger gespeicherte Wirkstoff gelöst und beispielsweise für einen Reinigungsvorgang aktiviert werden. Um das auf dem Wirkstoffträger in herstellerseitig getrocknetem Zustand flächig verteilte Reinigungsmittel beispielsweise an den Verschmutzungsgrad des zumindest einen zu reinigenden Gegenstandes und/oder an die Wasserhärte oder dergleichen Eigenschaft des zur Reinigung verwendeten Wassers anpassen zu können, und um durch übermäßige Reinigungsmittelgaben verursachte Umweltbelastungen oder durch zu geringe Zugabe des Reinigungsmittels verbleibende Verschmutzungen vermeiden zu können, ist der erfindungsgemäße Wirkstoffträger faltbar und/oder trennbar ausgebildet und durch Abbrechen und/oder Trennen einzelner Teilbereiche des Wirkstoffträgers portionierbar. Ist der Wirkstoffträger beispielsweise faltbar, kann der Wirkstoffträger entlang der Falzlinie in einzelne Teilbereiche zerrissen oder auch - beispielsweise mit Hilfe eines Messers oder einer Schere - leicht und präzise aufgeteilt werden, ohne dass größere Teilmengen des als Reinigungsmittel dienenden Wirkstoffes vom Wirkstoffträger als feine Partikel abfallen. Sofern der Wirkstoffträger nicht faltbar ist, kann auf andere Weise ein Auftrennen des erfindungsgemäßen Wirkstoffträgers in einzelne portionierende Teilbereiche erleichtert werden. Durch die blatt- oder tafelförmige Ausgestaltung des Wirkstoffträgers kann dieser in einzelne Teilbereiche aufgeteilt und portioniert werden, wobei jeweils ein dem Verschmutzungsgrad und/oder den Wassereigenschaften des beispielsweise zu Reinigungszwecken verwendeten Wassers angepasster Teilbereich des Wirkstoffträgers und damit eine auf diesem Teilbereich des Wirkstoffträgers bevorratete Teilmenge des Wirkstoffes abgetrennt und portioniert werden kann.

Dabei ist es im Interesse einer besonders guten Dosierung vorteilhaft, wenn der Wirkstoffträger in zumindest drei voneinander abtrennbare Teilbereiche aufgeteilt werden kann.

Die einfache und leichte Dosierung des auf dem erfindungsgemäßen Wirkstoffträger befindlichen und dort vorzugsweise in einer Kernlage flächig verteilten Wirkstoffes wird auch für den ungeübten Anwender wesentlich erleichtert, wenn der Wirkstoffträger durch zumindest eine linienförmige Schwächungsstelle in voneinander trennbare Teilbereiche aufteilbar ist. Dabei kann der blattförmige Wirkstoffträger auch zumindest zwei Scharen einander kreuzender linienförmiger Schwächungsstellen aufweisen, die einander im Winkel und vorzugsweise rechtwinklig kreuzen. Durch diese einander kreuzenden linienförmigen Schwächungsstellen kann der erfindungsgemäße Wirkstoffträger in Längs- und/oder in Querrichtung in einzelne, vorzugsweise rechteckige Teilbereiche aufgetrennt werden.

Besonders einfache und leicht herstellbare Ausführungsformen gemäß der Erfindung sehen vor, dass die zumindest eine Schwächungsstelle als Perforation oder als Querschnittsverengung des erfindungsgemäßen Wirkstoffträgers ausgebildet ist.

Der erfindungsgemäße Wirkstoffträger kann aus einem textilen Material hergestellt sein. Dabei wird eine Ausführung bevorzugt, bei welcher der erfindungsgemäße Wirkstoffträger aus wenigstens drei Lagen Vlies hergestellt ist, wobei ein, den zumindest einen Wirkstoff tragendes Innenvlies die Kernlage bildet und wobei das als Kernlage dienende Innenvlies beidseits durch wenigstens ein Außenvlies abgedeckt ist.

Die Vlies-Lagen des erfindungsgemäßen Wirkstoffträgers sind aus einem wasserlöslichen Material hergestellt. Sofern in einzelnen Vlies-Lagen des erfindungsgemäßen Wirkstoffträgers auch wasserunlösliche Materialien eingesetzt werden, ist es vorteilhaft, wenn das im erfindungsgemäßen Wirkstoffträger verwendete wasserunlösliche Material aus einem recyclebaren und insbesondere einem wiederverwendbaren Material hergestellt ist.

Vorteilhaft kann es sein, wenn zumindest eine der Vlies-Lagen des erfindungsgemäßen Wirkstoffträgers aus einem faserigen Material und/oder aus Zellulose, hergestellt ist. Dabei wird die Akzeptanz und Handhabung des erfindungsgemäßen Wirkstoffträgers wesentlich begünstigt, wenn zumindest die aus zellulosehaltigem Material hergestellten Außenvliese eine papierartige Haptik aufweisen.

Bei komplexen Reinigungsvorgängen, welche die Anwendung unterschiedlicher und zu verschiedenen Zeitpunkten des Reinigungsvorganges zuzuführender Reinigungsmittel vorsehen, ist es vorteilhaft, wenn auf den Wirkstoffträger und insbesondere auf dessen Innenvlies zumindest zwei Schichten von Wirkstoff aufgestreut oder dergleichen aufgetragen sind und wenn die Wirkstoff-Schichten innerhalb unterschiedlicher Einwirkungszeiten und/oder bei verschiedenen Temperaturen im zugegebenen Wasser auflösbar sind.

Auch ist es möglich, dass die auf das Innenvlies aufgestreuten oder dergleichen aufgetragenen Wirkstoff-Schichten zumindest durch eine dazwischenliegende wasserlösliche Trennschicht voneinander getrennt sind, und dass die Trennschicht unter Wasserzugabe innerhalb einer definierten Einwirkungszeit und/oder bei einer definierten Temperatur auflösbar ist und die darunterliegende Wirkstoffschicht freigibt.

Zusätzlich oder stattdessen kann auch eine auf das Innenvlies aufgetragene außenliegende Wirkstoffschicht von einer Trennschicht umhüllt sein, die innerhalb einer definierten Einwirkungszeit und/oder bei einer definierten Temperatur des zugegebenen Wassers auflösbar ist und die außenliegende Wirkstoffschicht freigibt. Da der beispielsweise als Wasch-, Spül- oder dergleichen Reinigungsmittel wirksame Wirkstoff im Wirkstoffträger und dessen Innenvlies in herstellerseitig getrocknetem Zustand gespeichert ist, wird eine Lagerung feuchter Wirkstoffträger und die Verwendung einer entsprechend feuchtigkeitsdichten Verpackung vermieden. Da der mit dem Wirkstoff versehene und diesen Wirkstoff in getrocknetem Zustand bevorratende Wirkstoffträger nicht in feuchtigkeitsdichten Verpackungen gelagert werden muss, wird ein Verschimmeln der andernfalls noch mit flüssigen Wirkstoffen benetzten Wirkstoffträger vermieden.

Da der erfindungsgemäße Wirkstoffträger auf seinem Innenvlies auch mehrere Schichten oder Lagen verschiedener Wirkstoffe aufweisen kann, ist es möglich, dass die auf dem Wirkstoffträger befindlichen verschiedenen Wirkstoffe während des Anwendungsprozesses in unterschiedlichen, einander nachfolgenden Zeitabständen gelöst werden. So kann beispielsweise ein von Beginn an bereitzustellendes Reinigungsmittel die äußere Lage der auf das Innenvlies aufgetragenen Wirkstoff-Schichten bilden, wobei diese äußeren Lagen des Innenvlieses von zumindest einer darunterliegenden und erst später im Reinigungsprozess benötigten Wirkstoff- oder Reinigungsmittel-Schicht durch eine dazwischenliegende definierte Trennschicht getrennt ist, die in Abhängigkeit von der Einwirkungszeit und/oder der Temperatur erst zu einem späteren Zeitpunkt aufgelöst und freigegeben wird. Auf diese Weise können auf dem erfindungsgemäßen blattförmigen Wirkstoffträger auch zwei oder mehr Wirkstoffe aufgestreut oder aufgebracht sein.

In einem Ausführungsbeispiel weist der erfindungsgemäße blattförmige Wirkstoffträger ein wasserlösliches Innenvlies auf, das beispielsweise aus einem Polyvinylalkohol oder einem anderen geeigneten Material hergestellt ist. Auf dieses Innenvlies wird ein beispielsweise als Reinigungs- oder Spülmittel dienender Wirkstoff in Form einer pulverförmigen Streubeschichtung aufgetragen. Dieser Wirkstoff kann in einem Mahl- und Homogenisierprozess zu einem streu- und rieselfähigen Pulver hergestellt werden, welches über eine Streupulveranlage, zum Beispiel https://www.santexrimar.com/brandes/cavitec/machinery/caviscat/ auf das Innenvlies aufgestreut wird, bevor das Innenvlies und der darauf aufgestreute Wirkstoff zu einem festen Verbund geschmolzen und durch einen Kalander-Prozess bei etwa 140° bis 220° Temperaturen verpresst werden. Der auf das Innenvlies aufgetragene Wirkstoff kann einen Anteil von 10 bis 60 Gewichtsprozent von schmelzenden Tensiden, beispielsweise von Natriumlaurylsulfat mit 206° Schmelzpunkt, sowie 20 bis 40 Gewichtsprozent von schmelzenden Polymeren, beispielsweise von Polyvinylalkohol mit einem Schmelzpunkt von 200° C, aufweisen. Darüber hinaus können im Wirkstoff auch Bleichmittel, Komplexbildner, Enzyme oder andere temperaturstabile, nichtschmelzende Additive beigemischt sein.

Das als Kernlage dienende und mit dem zumindest einen Wirkstoff fest verbundene Innenvlies wird in einem nachfolgenden Verfahrensschritt auf beiden gegenüberliegenden Flachseiten des blattförmigen Wirkstoffträgers jeweils mit einem Außenvlies versehen, wobei diese Außenvliese ebenfalls aus einem wasserlöslichen Material bestehen. Diese Außenvliese werden beidseits auf den Oberseiten des zunächst bahnenförmigen Innenvlieses auflaminiert, so dass die auf das Innenvlies aufgeschmolzene Formulierung im Kern zwischen den beiden Außenvliesen positioniert ist. Der dadurch hergestellte Verbund der beispielsweise ein Wasch- oder Reinigungsmittel enthaltenden Kernlage wird durch wasserlösliche Außenvliese beidseits abgedeckt. Da die Chemikalien eines Wasch- oder Reinigungsmittels häufig hautreizend sind und als gefährlich im Umgang eingestuft werden, wird somit in vorteilhafter Weise ein direkter Hautkontakt ausgeschlossen. Der zur Herstellung des aus Innenvlies und Wirkstoff bestehenden Verbunds erforderliche Schmelzprozess ist umweltfreundlich, da kein Entzug von Wasser notwendig ist und auch keine Abwässer anfallen. Ebenso werden Emissionen der Luft weitestgehend reduziert. Ein solches Waschmittel lässt sich im erfindungsgemäßen Verfahren wirtschaftlich herstellen. In einem nachfolgenden Prozessschritt können auf den Wirkstoffträger noch Duftstoffe aufgesprüht werden. Solche Duftstoffe lassen sich aber auch in der pulverförmigen Vorformulierung des Wirkstoffes einsetzen.

## Patentansprüche

1. Verfahren zur Herstellung eines blattförmigen Wirkstoffträgers, der zumindest einen wasserlöslichen Wirkstoff beinhaltet, welcher in herstellerseitig getrocknetem Zustand gespeichert und durch Wasserzugabe lösbar und aktivierbar ist, wobei der zumindest eine Wirkstoff ein Wasch-, Spül-, Reinigungs- oder Lebensmittel ist, **dadurch gekennzeichnet, dass** der zumindest eine Wirkstoff als streu- oder rieselfähiges Pulver auf ein Innenvlies aus wasserlöslichem Material aufgestreut und daraus anschließend durch Schmelzen ein fester Verbund hergestellt wird, und dass der aus dem Innenvlies und dem zumindest einen, als Streupulver aufgetragenen Wirkstoff hergestellte Verbund als Kernlage zwischen beidseits aufgebrachte Außenvliese aus wasserlöslichem Material positioniert wird.

2. Verfahren nach Anspruch 1, **dadurch gekennzeichnet, dass** der zumindest eine Wirkstoff vor dem Aufstreuen auf das Innenvlies durch einen Mahl- und Homogenisierprozess zu dem streu- und rieselfähigen Pulver aufbereitet wird, und/oder dass das Innenvlies und der zumindest eine, als Pulver aufgestreute Wirkstoff bei einer Temperatur im Bereich zwischen 140° C bis 220° C zu einem festen Verbund geschmolzen werden, und/oder dass das Innenvlies und der zumindest eine, als Pulver aufgestreute Wirkstoff geschmolzen und durch einen Kalander-Prozess zu einem festen Verbund verpresst werden.

3. Blattförmiger Wirkstoffträger, der zumindest einen wasserlöslichen Wirkstoff beinhaltet, welcher in herstellerseitig getrocknetem Zustand gespeichert und durch Wasserzugabe lösbar und aktivierbar ist, insbesondere hergestellt in einem Verfahren gemäß den Ansprüchen 1 bis 2, **dadurch gekennzeichnet, dass** der blattförmige Wirkstoffträger eine, den zumindest einen Wirkstoff tragende Innenschicht aufweist, die beidseits durch textile Schichten aus wasserlöslichen Außenvliesen abgedeckt ist.

4. Blattförmiger Wirkstoffträger nach Anspruch 3, **dadurch gekennzeichnet, dass** die den Wirkstoff tragende Innenschicht ein Innenvlies aus wasserlöslichem Material aufweist, das mit dem zumindest einen, als streu- und rieselfähiges Pulver aufgestreuten Wirkstoff durch Schmelzen verbunden und/oder durch einen Kalanderprozess verpresst ist.

5. Blattförmiger Wirkstoffträger nach einem der Ansprüche 3 bis 4, **dadurch gekennzeichnet, dass** das als Wirkstoff vorgesehene Reinigungsmittel ein reinigendes Körperpflegemittel ist.

6. Blattförmiger Wirkstoffträger nach einem der Ansprüche 3 bis 5, **dadurch gekennzeichnet, dass** das als Wirkstoff vorgesehene Lebensmittel ein den Anwender stimulierendes Lebensmittel und insbesondere ein teein- oder koffeinhaltiges Lebensmittel ist.

7. Blattförmiger Wirkstoffträger nach einem der Ansprüche 3 bis 6, **dadurch gekennzeichnet, dass** das Innenvlies aus einem Polyvinylalkohol hergestellt ist.

8. Blattförmiger Wirkstoffträger nach einem der Ansprüche 3 bis 7, **dadurch gekennzeichnet, dass** der als Reinigungsmittel ausgebildete Wirkstoff wenigstens ein schmelzendes Tensid und mindestens ein schmelzendes Polymer enthält, und/oder dass dem, wenigstens ein schmelzendes Tensid und mindestens ein schmelzendes Polymer enthaltenden Wirkstoff zumindest ein temperaturstabiles, nicht-schmelzendes Bleichmittel und/oder Komplexbildner und/oder Enzym als Additiv beigemischt ist.

9. Blattförmiger Wirkstoffträger nach einem der Ansprüche 3 bis 8, **dadurch gekennzeichnet, dass** in dem zumindest einen Wirkstoff das mindestens eine Tensid einen Anteil von 10 bis 60 Gewichtsprozent (trocken) hat und dass das schmelzende Polymer einen Anteil von 20 bis 40 Gewichtsprozent (trocken) aufweist.

10. Blattförmiger Wirkstoffträger nach einem der Ansprüche 3 bis 9, **dadurch gekennzeichnet, dass** wenn der Wirkstoff Natriumlaurylsulfat als schmelzendes Tensid enthält, und dass das als Natriumlaurylsulfat ausgebildete Tensid vorzugsweise einen Schmelzpunkt von etwa 206° C hat.

11. Blattförmiger Wirkstoffträger nach einem der Ansprüche 3 bis 10, **dadurch gekennzeichnet, dass** als schmelzendes Polymer beispielsweise ein Polyvinylalkohol, insbesondere mit einem Schmelzpunkt von ca. 200°, verwendet wird.

12. Blattförmiger Wirkstoffträger nach einem der Ansprüche 3 bis 11, **dadurch gekennzeichnet, dass** der zumindest eine Wirkstoff durch einen Mahl- und Homogenisierprozess zu dem streu- und rieselfähigen Pulver aufbereitet wird.

13. Blattförmiger Wirkstoffträger nach einem der Ansprüche 3 bis 12, **dadurch gekennzeichnet, dass** das Innenvlies und der zumindest eine als Pulver aufgestreute Wirkstoff geschmolzen und durch einen Kalander-Prozess zu einem festen Verbund verpresst werden, und/oder dass das Innenvlies und der zumindest eine als Pulver aufgestreute Wirkstoff bei einer Temperatur im Bereich zwischen 140° C bis 220° C zu einem festen Verbund geschmolzen werden.

14. Blattförmiger Wirkstoffträger nach dem Oberbegriff von Anspruch 3, insbesondere nach einem der Ansprüche 3 bis 13, **dadurch gekennzeichnet, dass** der Wirkstoffträger durch Abbrechen und/oder Trennen einzelner Teilbereich des Wirkstoffträgers portionierbar ist.

15. Blattförmiger Wirkstoffträger nach einem der Ansprüche 3 bis 14, **dadurch gekennzeichnet, dass** der Wirkstoffträger aus einem wasserlöslichen und/oder biokompatiblen Material, vorzugsweise aus einem faserigen Material und/oder aus Zellulose, hergestellt ist, und/oder dass der aus zellulosehaltigem Material hergestellte Wirkstoffträger eine papierartige Haptik aufweist.

16. Blattförmiger Wirkstoffträger nach einem der Ansprüche 3 bis 15, **dadurch gekennzeichnet, dass** auf den Wirkstoffträger zumindest zwei Schichten von Wasch-, Spül- oder dergleichen Reinigungsmitteln aufgesprüht oder dergleichen aufgetragen sind, und dass die Reinigungsmittelschichten im zugegebenen Wasser innerhalb unterschiedlicher Einwirkungszeiten und/oder durch unterschiedliche Einwirkungstemperaturen auflösbar sind, und/oder dass die zumindest zwei Reinigungsmittelschichten zumindest durch eine dazwischenliegende wasserlösliche Trennschicht voneinander getrennt sind, und dass die Trennschicht innerhalb einer definierten Einwirkungszeit und/oder unter einer definierten Einwirkungstemperatur auflösbar ist und die darunterliegende Reinigungsmittelschicht freigibt.

17. Reinigungsmittelträger nach einem der Ansprüche 3 bis 16, **dadurch gekennzeichnet, dass** zumindest eine insbesondere außenliegende Reinigungsmittelschicht von einer Trennschicht umhüllt ist, die unter Wasserzugabe innerhalb einer definierten Einwirkungszeit und/oder unter einer definierten Einwirkungstemperatur auflösbar ist und die außenliegende Reinigungsmittelschicht freigibt.

## Claims

1. Method for producing a sheet-shaped active ingredient carrier containing at least one water-soluble active ingredient which is stored in a manufacturer-dried state and can be dissolved and activated by the addition of water, wherein the at least one active ingredient is a detergent, rinsing agent, cleaning agent or foodstuff, **characterized in that** the at least one active ingredient is scattered as a spreadable or pourable powder onto an inner nonwoven fabric made of water-soluble material and a solid composite is then produced from this by melting, and **in that** the composite produced from the inner nonwoven fabric and the at least one active ingredient applied as a powder for scattering is positioned as a core layer between outer nonwoven fabrics made of water-soluble material applied on both sides.

2. Method according to claim 1, **characterized in that** the at least one active ingredient is processed into a spreadable or pourable powder by a grinding and homogenizing process before being scattered onto the inner nonwoven fabric, and/or **in that** the inner nonwoven and the at least one active ingredient scattered as a powder are melted at a temperature in the range between 140°C and 220°C to form a solid composite, and/or **in that** the inner nonwoven and the at least one active ingredient applied as a powder are melted and pressed into a solid composite by means of a calendering process.

3. Sheet-shaped active ingredient carrier containing at least one water-soluble active ingredient which is stored in a manufacturer-dried state and can be dissolved and activated by the addition of water, in particular manufactured in a method according to claims 1 to 2, **characterized in that** the sheet-shaped active ingredient carrier has an inner layer carrying the at least one active ingredient, which is covered on both sides by textile layers made of water-soluble outer nonwovens.

4. Sheet-shaped active ingredient carrier according to claim 3, **characterized in that** the inner layer carrying the active ingredient comprises an inner nonwoven made of water-soluble material which is bonded to the at least one active ingredient, which is scattered as a spreadable and pourable powder, by melting and/or by a calendering process.

5. Sheet-shaped active ingredient carrier according to one of claims 3 to 4, **characterized in that** the cleaning agent intended as the active ingredient is a cleansing personal care product.

6. Sheet-shaped active ingredient carrier according to one of claims 3 to 5, **characterized in that** the foodstuff intended as the active ingredient is a foodstuff that stimulates the user and, in particular, a foodstuff containing theine or caffeine.

7. Sheet-shaped active ingredient carrier according to one of claims 3 to 6, **characterized in that** the inner nonwoven is made of a polyvinyl alcohol.

8. Sheet-shaped active ingredient carrier according to one of claims 3 to 7, **characterized in that** the active ingredient designed as a cleaning agent contains at least one melting surfactant and at least one melting polymer, and/or **in that** at least one temperature-stable, non-melting bleaching agent and/or complexing agent and/or enzyme is added as an additive to the active ingredient containing at least one melting surfactant and at least one melting polymer.

9. Sheet-shaped active ingredient carrier according to one of claims 3 to 8, **characterized in that** in the at least one active ingredient, the at least one surfactant has a proportion of 10 to 60 percent by weight (dry) and **in that** the melting polymer has a proportion of 20 to 40 percent by weight (dry).

10. Sheet-shaped active ingredient carrier according to one of claims 3 to 9, **characterized in that** the active ingredient contains sodium lauryl sulfate as a melting surfactant, and **in that** the surfactant in the form of sodium lauryl sulfate preferably has a melting point of about 206°C.

11. Sheet-shaped active ingredient carrier according to one of claims 3 to 10, **characterized in that** a polyvinyl alcohol, in particular with a melting point of approx. 200°, is used as the melting polymer.

12. Sheet-shaped active ingredient carrier according to one of claims 3 to 11, **characterized in that** the at least one active ingredient is processed into a spreadable and pourable powder by a grinding and homogenizing process.

13. Sheet-shaped active ingredient carrier according to one of claims 3 to 12, **characterized in that** the inner nonwoven and the at least one active ingredient scattered as a powder are melted and pressed into a solid composite by a calendering process, and/or **in that** the inner nonwoven and the at least one active ingredient scattered as a powder are melted into a solid composite at a temperature in the range between 140°C and 220°C.

14. Sheet-shaped active ingredient carrier according to the preamble of claim 3, in particular according to one of claims 3 to 13, **characterized in that** the active ingredient carrier can be portioned by breaking off and/or separating individual parts of the active ingredient carrier.

15. Sheet-shaped active ingredient carrier according to one of claims 3 to 14, **characterized in that** the active ingredient carrier is made of a water-soluble and/or biocompatible material, preferably of a fibrous material and/or of cellulose, and/or **in that** the active ingredient carrier made of cellulose-containing material has a paper-like feel.

16. Sheet-shaped active ingredient carrier according to one of claims 3 to 15, **characterized in that** at least two layers of washing, rinsing or similar cleaning agents are sprayed or similarly applied to the active ingredient carrier, and **in that** the cleaning agent layers are soluble in the added water within different exposure times and/or at different exposure temperatures, and/or **in that** the at least two cleaning agent layers are separated from each other by at least one interposed water-soluble separating layer, and **in that** the separating layer is soluble within a defined exposure time and/or at a defined exposure temperature and releases the cleaning agent layer underneath.

17. Cleaning agent carrier according to one of claims 3 to 16, **characterized in that** at least one cleaning agent layer, in particular an outer cleaning agent layer, is surrounded by a separating layer which is dissolvable with the addition of water within a defined exposure time and/or at a defined exposure temperature and releases the outer cleaning agent layer.

## Revendications

1. Procédé de fabrication d'un système d'administration de substance active en forme de feuille contenant au moins une substance active hydrosoluble, qui est stockée dans un état séché par le fabricant et qui peut être dissoute et activée par l'ajout d'eau, l'au moins une substance active étant un produit de lavage, de rinçage, de nettoyage ou un produit alimentaire, **caractérisé en ce que** l'au moins une substance active est épandue sous forme de poudre dispersible ou épandable sur un non-tissé intérieur fait de matière hydrosoluble et un composite solide est produit à partir de ceux-ci par fusion et **en ce que** le composite formé par le non-tissé intérieur et l'au moins une substance active appliquée sous forme de poudre épandable est positionnée pour former une couche centrale entre des non-tissés extérieurs en matière hydrosoluble appliqués des deux côtés.

2. Procédé selon la revendication 1, **caractérisé en ce que** l'au moins une substance active est préparée avant d'être épandue sur le non-tissé intérieur par un procédé de broyage et d'homogénéisation pour obtenir la poudre dispersible ou épandable et/ou **en ce que** le non-tissé intérieur et l'au moins une substance active épandue sous forme de poudre sont fondus à une température comprise entre 140 °C et 220 °C pour former un composite solide, et/ou **en ce que** le non-tissé intérieur et l'au moins une substance active épandue sous forme de poudre sont fondus et pressés par un procédé de calandrage pour former un composite solide.

3. Système d'administration de substance active en forme de feuille contenant au moins une substance active hydrosoluble, qui est stockée dans un état séché par le fabricant et qui peut être dissoute et activée par l'ajout d'eau, fabriqué en particulier par un procédé selon les revendications 1 à 2, **caractérisé en ce que** le système d'administration de substance active en forme de feuille comporte une couche intérieure portant au moins une substance active, qui est recouverte des deux côtés par des couches textiles composées de non-tissés extérieurs hydrosolubles.

4. Système **d'administration** de substance active en forme de feuille selon la revendication 3, **caractérisé en ce que** la couche intérieure portant la substance active comporte un non-tissé intérieur en matière hydrosoluble qui est assemblée par fusion et/ou pressée par un procédé de calandrage avec l'au moins une substance active épandue sous forme de poudre.

5. Système d'administration de substance active en forme de feuille selon l'une des revendications 3 à 4, **caractérisé en ce que** le produit de nettoyage prévu comme substance active est un produit de soin du corps.

6. Système d'administration de substance active en forme de feuille selon l'une des revendications 3 à 5, **caractérisé en ce que** le produit alimentaire prévu comme substance active est un produit alimentaire qui stimule l'utilisateur, en particulier un produit alimentaire contenant de la théine ou de la caféine.

7. Système d'administration de substance active en forme de feuille selon l'une des revendications 3 à 6, **caractérisé en ce que** le non-tissé intérieur est fabriqué à partir d'un alcool polyvinylique.

8. Système d'administration de substance active en forme de feuille selon l'une des revendications 3 à 7, **caractérisé en ce que** la substance active conçue comme un produit de nettoyage contient au moins un tensioactif fusible et au moins un polymère fusible et/ou **en ce que** la substance active contenant au moins un tensioactif fusible et au moins un polymère fusible est additionnée d'au moins un agent blanchissant et/ou complexant et/ou une enzyme non fusible et thermiquement stable constituant un additif.

9. Système d'administration de substance active en forme de feuille selon l'une des revendications 3 à 8, **caractérisé en ce que** la part de l'au moins un tensioactif dans l'au moins une substance active est de 10 à 60 % en poids (de matière sèche) et la part du polymère fusible est de 20 à 40 % en poids (de matière sèche).

10. Système d'administration de substance active en forme de feuille selon l'une des revendications 3 à 9, **caractérisé en ce que** si la substance active contient du laurylsulfate de sodium comme tensioactif fusible et **en ce que** le tensioactif prenant la forme de laurylsulfate de sodium a un point de fusion d'environ 206 °C.

11. Système d'administration de substance active en forme de feuille selon l'une des revendications 3 à 10, **caractérisé en ce que** le polymère fusible utilisé est, par exemple, un alcool polyvinylique, en particulier avec un point de fusion d'environ 200 °C.

12. Système d'administration de substance active en forme de feuille selon l'une des revendications 3 à 11, **caractérisé en ce que** l'au moins une substance active est préparée par un procédé de broyage et d'homogénéisation pour obtenir la poudre dispersible ou épandable.

13. Système d'administration de substance active en forme de feuille selon l'une des revendications 3 à 12, **caractérisé en ce que** le non-tissé intérieur et l'au moins une substance active épandue sous forme de poudre sont fondus et pressés par un procédé de calandrage pour former un composite solide et/ou **en ce que** le non-tissé intérieur et l'au moins une substance active épandue sous forme de poudre sont fondus à une température comprise entre 140 °C et 220 °C pour former un composite solide.

14. Système d'administration de substance active en forme de feuille selon le préambule de la revendication 3, en particulier selon l'une des revendications 3 à 13, **caractérisé en ce que** le système d'administration de substance active peut être divisé en portions par la rupture et/ou la séparation de parties du système d'administration de substance active.

15. Système d'administration de substance active en forme de feuille selon l'une des revendications 3 à 14, **caractérisé en ce qu'**il est fabriqué à partir d'une matière hydrosoluble et/ou biocompatible, de préférence d'une matière fibreuse et/ou de cellulose, et/ou **en ce que** le système d'administration de substance active fabriqué en matériau contenant de la cellulose a des propriétés haptiques proches du papier.

16. Système d'administration de substance active en forme de feuille selon l'une des revendications 3 à 15, **caractérisé en ce qu'**au moins deux couches de produits de lavage, de rinçage ou de produits de nettoyage similaires sont pulvérisées ou appliquées de façon analogue sur le système d'administration de substance active et **en ce que** les couches de produit de nettoyage peuvent être dissoutes dans l'eau ajoutée sur des durées d'action différentes et/ou à des températures d'action différentes, et/ou **en ce que** les au moins deux couches de produit de nettoyage sont séparées l'une de l'autre au moins par une couche de séparation hydrosoluble située entre elles et **en ce que** la couche de séparation peut être dissoute sur une durée d'action définie et/ou à une température d'action définie pour libérer la couche de produit de nettoyage sous-jacente.

17. Système d'administration de produit de nettoyage l'une des revendications 3 à 16, **caractérisé en ce qu'**au moins une couche de produit de nettoyage, en particulier située sur l'extérieur, est enveloppée d'une couche de séparation qui peut être dissoute sur une durée d'action définie et/ou à une température d'action définie pour libérer la couche de produit de nettoyage extérieure.
